# EUROPEAN PATENT SPECIFICATION

(11) **EP 2 670 197 B1**
(45) Date of publication and mention of the grant of the patent: **24.08.2016**
(21) Application number: 12170286.4
(22) Date of filing: 31.05.2012
(51) Int. Cl.: H04W 36/24, H04W 36/16

(54) **Uplink and electromagnetic field based triggers for handover**
Uplink und Elektromagnetisches Feld basierte Auslöser zur Weiterleitung
Déclencheurs à base de liaison montante et de champ electromagnetique pour transfert

(43) Date of publication of application: 04.12.2013
(73) Proprietor: FUJITSU LIMITED, Kawasaki-shi, Kanagawa 211-8588 (JP)
(72) Inventor: Tesanovic, Milos, Hayes, Middlesex UB4 8FE (GB); Wilson, Mick, Romsey, Hampshire SO51 5RW (GB); Vadgama, Sunil Keshavji, Ashford, Middlesex TW15 3RD (GB)
(74) Representative: Stebbing, Timothy Charles

(56) References cited:
- WO-A1-2012/067563
- US-A1- 2006 120 330

## Description

### Field of the Invention

The present invention relates to handovers of mobile terminals in or between wireless communication networks, and more particularly the effects of such handovers upon electro-magnetic field (EMF) exposure of users of such terminals.

### Background of the Invention

Wireless communication networks are widely known in which mobile terminals communicate with base stations. The base stations typically provide a number of cells covering a given geographical area more or less seamlessly, neighbouring cells being mutually adjacent and/or overlapping. In the simplest case, a mobile terminal within the geographical area will communicate with one "serving" base station both on the uplink (direction of communication from the terminal to a base station) and on a downlink (direction of communication from the base station to the terminal). However, the terminal may also be in range of one or more other neighbour base stations or cells, the wireless signal quality with each being subject to change as a user of the mobile terminal moves around, and/or due to other factors such as deactivation of a base station. This leads to a requirement for handover between one base station/cell and another. The handover will usually be between base stations belonging to the same network and thus using the same radio access technology (RAT); however, inter-RAT handovers are also possible.

Handover in wireless systems is conventionally based on downlink (DL) signal quality: when the DL signal quality as measured by the mobile terminal using pilot signals transmitted by the base stations drops below a certain threshold, the terminal is handed over to one of the suitable neighbours. Normally, such a handover is effective both for the downlink and the uplink.

One type of cellular wireless communication network is based upon the set of standards referred to as Long-Term Evolution (LTE). In LTE, the measurement most commonly used for handover is the Reference Signal Received Quality (RSRQ), which is an indicator of the wanted signal quality which takes into account the interference levels. The terminal (referred to as a UE in LTE) then uses channel reciprocity to estimate the required power settings for the uplink (UL), by knowing the transmission power of the DL reference signals (which is broadcast by the base station, referred to in LTE as the eNB) and their received power (which the UE measures).

As the UE moves out of the coverage area of its current serving cell, after the RSRQ with respect to a neighbour cell equals (or exceeds by a sufficient margin) the RSRQ with respect to the serving cell, the terminal transmits this information to the base station of the serving cell, and in one form of handover the serving base station or a higher-level node determines that a handover is required to another, "destination" base station. However, various forms of handover are possible in wireless communication networks; for example, the handover decision may be taken by the "destination" base station or even at the terminal.

As an embodiment of the present invention will be described later with respect to LTE, it may be worth briefly outlining some relevant aspects of LTE network topology.

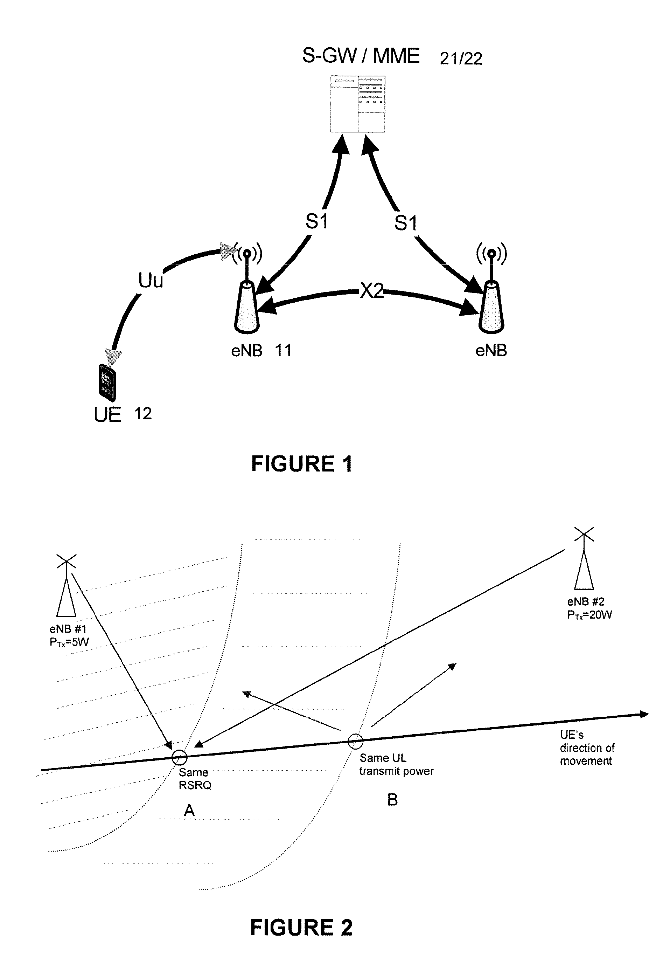

The network topology in LTE is illustrated in Figure 1. As can be seen, each UE 12 connects over a wireless link via a Uu interface to an enhanced node-B or eNB 11. It should be noted that various types of eNB are possible having differing transmit powers and therefore providing coverage areas (cells) of differing sizes.

Each eNB 11 in turn is connected by a (usually) wired link using an interface called S1 to higher-level or "core network" entities, including a Serving Gateway (S-GW 22), and a Mobility Management Entity (MME 21) for managing the system and sending control signalling to other nodes, particularly eNBs, in the network. In addition (not shown), a Packet Data Network (PDN) Gateway (P-GW) is present, separately or combined with the S-GW 22, to exchange data packets with any packet data network including the Internet. Thus, communication is possible between the LTE network and other networks, including other cellular wireless communication networks. It should be noted that In the same geographical area, distinct wireless communication networks (or radio access networks - RANs) may exist using the same, or different, radio access technology (RAT). These networks may be under control of the same operator, or may be coordinated in another way. Thus, inter-RAN and inter-RAT handovers are also possible.

Figure 2 illustrates a known handover procedure within a single LTE-based wireless communication network. For simplicity, it is assumed that cells in this network are each provided by a respective base station (eNB), although in practice there is not necessarily a one-to-one correspondence between cells and base stations. A UE 12 is assumed to be communicating initially with eNB #1, in other words eNB #1 is the serving or "anchor" station for the UE.

The Figure depicts the UE 12 moving out of the coverage area of eNB #1 (indicated by the narrow-spaced dashed lines) and into the coverage area of eNB #2. Conventionally, at the point marked "A" where the RSRQ from eNB #1 drops so that the RSRQ from eNB #2 becomes dominant (labelled 'Same RSRQ') the UE would normally be handed over to eNB #2, in other words from the current serving cell provided by eNB #1 to the neighbour cell provided by eNB#2.

Assuming that the distance from the eNBs is the dominant factor in signal quality, and that the transmit power of eNB #1 is much lower than that of eNB #2 (5W compared to 20W in this example), this handover happens relatively close to eNB #1. After handover, eNB #2 becomes the new serving station for the UE. The resulting increase in the distance from the serving station will now cause the UE to have to increase its transmit power to maintain the same signal quality on the UL, thereby increasing the EMF exposure of the user and potentially shortening the battery life of the terminal.

If UL transmit power is used instead of DL RSRQ as a trigger for handover (as is proposed in the prior art), this effectively extends the coverage area of eNB #1 (see the area indicated by broader-spaced dashed lines) until the point marked "B" and labelled 'Same UL transmit power' in Figure 2. This is the point where equal or higher UL power would be required by the terminal to reach eNB #1 than to reach eNB #2. However, by this time, the DL quality will have dropped significantly, provided no further increase in transmit power of the serving site (i.e. eNB #1) is possible. Thus, delaying handover until point B involves a deterioration in the downlink signal quality in the current serving cell.

WO 2012/067563 A1 discloses a method, system and terminal according to the preamble of each independent claim. The terminal receives a target on SAR (Specific Absorption Rate) from the network. During a handover of the terminal from a serving base station to a target base station, one or more SAR parameters for use in the handover target cell can be signalled by the serving base station via a handover command. In this way, a channel can be selected in the target base station which meets a SAR requirement.

US 2006/120330 A1 discloses a terminal which, at the time of manufacture, has stored in its internal memory a SAR value for each of the possible communication channels it may use. This allows a channel having a relatively low SAR to be assigned by a new base station following a handover.

Whilst these prior art proposals address the issue of EMF exposure of a user, there is no influence of EMF exposure upon the handover decision. Consequently, there is a need for an improved handover trigger for handing over mobile terminals between cells of wireless communication networks, taking into account EMF exposure to the user.

### Summary of the Invention

Maintaining low UL transmit power at a terminal has the benefit of reducing the EMF exposure to the user. As already mentioned, handover of a user to another cell based on UL transmit power may be effective to avoid the increase in UL transmit power as the user moves away from the current serving cell. However, basing a handover decision solely on UL transmit power (as is proposed in some instances of related prior art, as mentioned above) could lead to an increase in interference and traffic loading, as well as severe degradation of DL channel quality prior to handover.

Thus, according to a first aspect of the present invention, there is provided a method of performing handover in at least one wireless communication network of a terminal from a serving cell to another cell, the method characterised by comprising:
the terminal (12) making an assessment of EMF exposure of a user of the terminal;
the terminal (12) transmitting an indication related to the EMF exposure of the user;
a said network receiving said indication; and
a said network deciding to perform handover of the terminal by basing the handover decision on one or more criteria including said indication.

Consequently, in this aspect of the invention, the handover trigger from the serving cell to another cell is based at least in part upon EMF exposure of the user. As explained below, the "indication related to EMF exposure" may be some value signifying EMF as detected or estimated by the terminal, or may comprise information relevant for assessment of an EMF level by the network.

Preferably, the method further comprises the terminal transmitting information derived from a measurement of downlink signal quality, and the criteria used in the deciding step take into account this information. In this case, the network or the terminal may derive, from two or more measurements of downlink signal quality, a change in the downlink signal quality as a criterion used in said deciding step. In this way, the handover trigger is also based on downlink signal quality.

Further factors can also be taken into account in deciding whether or not to perform handover. In embodiments of the present invention, the criteria used in said deciding step further include at least one of:
prior indications received from the terminal related to EMF exposure;
a battery status of the terminal; and
a ratio of uplink traffic to downlink traffic between the terminal and its serving cell.

Preferably the above criteria are compared to threshold values. The threshold values may optimise a pre-defined cost function. Additionally, the cost function may include an expected effect of a handover on terminal battery life.

The above-mentioned indication related to EMF exposure may be based on, or may indicate, one or more of:
a location of the terminal with respect to the user;
an orientation of the terminal with respect to the user;
a measurement of EMF dosage of the user;
an uplink transmit power of the terminal; and
a user requirement on EMF exposure.

Although the usual case of handover is to transfer all communications from one cell to another, this is not essential. An embodiment of the present invention provides the possibility of a partial handover, in which handover is restricted to one of uplink and downlink communication whereby the terminal may have a different serving cell for uplink and downlink respectively.

In one example of this embodiment, the terminal transmits information derived from a measurement of downlink signal quality, and the step of deciding to perform handover of the terminal comprises deciding to handover uplink communication to said another cell whilst keeping downlink communication with said serving cell in view of the downlink signal quality. Thus, for example, if the existing downlink signal quality as reported by the terminal is at an acceptable level, and if handover of the downlink might be expected to deteriorate the downlink signal quality, the handover may be restricted to uplink only.

Whilst only a single terminal has been referred to so far, in practice many terminals will be served by the at least one wireless communication network. Consequently there may be a plurality of terminals for which it is decided whether or not to perform handover.

In this case the method may further comprise:
ranking terminals in order of greatest constraint on uplink transmit power in view of their indications related to EMF exposure;
determining, in the at least one network, uplink resources subject to least interference;
allocating the uplink resources of least interference to the terminals based on the rank; and
performing handover of the terminal, at least on the uplink, if necessary to use the resources allocated.

Alternatively, or in addition, the method may further comprise:
ranking terminals in order of least downlink channel quality;
determining, in the at least one network, downlink resources subject to least interference;
allocating the downlink resources of least interference to the terminals based on the rank; and
performing handover of the terminal, at least on the downlink, if necessary to use the resources allocated.

According to a second aspect of the present invention, there is provided a wireless communication system comprising a terminal and one or more base stations providing a serving cell and another cell, characterised in that:
the terminal is arranged to assess EMF exposure of a user of the terminal and to transmit an indication related to the EMF exposure of the user;
a said base station is arranged to receive said indication; and
a said base station is arranged to make a handover decision of the terminal using one or more criteria including said indication.

According to a third aspect of the present invention, there is provided a terminal for use in a wireless communication network characterised by comprising:
means for assessing EMF exposure of a user of the terminal and determining an indication related to the EMF exposure of the user;
means for measuring signal quality on a downlink from a serving cell;
means for deriving a change in downlink signal quality from two or more such measurements; and
means for transmitting the indication related to the EMF exposure of the user and an indication of the change in downlink signal quality.

In one embodiment, the indication related to EMF exposure is an estimate of EMF exposure to the user. Alternatively it is possible to provide the indication indirectly, in the form of an indication of proximity of the user to the terminal for example.

The present invention may be applied in the context of a single wireless communication network, but this is not essential. Thus, the serving cell and the "another" cell referred to above need not belong to the same wireless communication network (RAN), or even use the same RAT. Likewise the base stations need not belong to the same RAN/RAT.

A central entity may be employed to coordinate handovers between cells in different wireless communication networks. Thus, according to a third aspect of the present invention, there is provided a central entity connected to first and second wireless communication networks, the first wireless communication network providing a serving cell of a terminal, the second network providing another cell within range of the terminal, the entity comprising:
means for receiving, via one of the first and second networks, an indication transmitted from the terminal and related to EMF exposure of a user of the terminal;
   and
means for deciding whether or not to handover the terminal from the serving cell in the first network to the another cell in the second network using one or more criteria including said indication.

A further aspect of the present invention provides program code (which may be stored on a non-transitory computer-readable medium) which when executed by a processor of a terminal, base station or a central entity in a wireless communication network, performs any of the steps defined above.

Thus, embodiments of the present invention may provide handover triggers based on the requirements for low uplink transmit power and low EMF user exposure, rather than solely on downlink channel quality as is normally done in cellular systems.

As explained below, when the handover is triggered based on a drop in downlink channel quality, the resulting change of the serving base station may result in a steep increase in the uplink power required to maintain the same quality of service. Embodiments of the present invention may mitigate this problem by basing the handover triggers on indications of EMF exposure of the user (determined in part based on uplink transmit power) while proposing ways to mitigate a potential degradation in downlink signal quality such a handover may cause. Additional inputs to the handover process are proposed in this invention, including service-related triggers (e.g. whether the user traffic is uplink or downlink dominated), utilization-related triggers (e.g. what the usage of uplink resources is). These help mitigate interference and loading issues which the proposed type of handover may incur in some instances. The invention can be applied to 3GPP LTE-A and other cellular wireless communications networks.

### Brief Description of the Drawings

Figure 1 shows a network topology in LTE;
Figure 2 shows a conventional handover trigger in an LTE-based wireless communication network;
Figure 3 shows a handover trigger in accordance with an embodiment of the present invention;
Figure 4 is a flowchart of a first embodiment of the invention;
Figure 5 is a flowchart of a second embodiment of the invention;
Figure 6 is a flowchart of a third embodiment of the invention; and
Figure 7 is a flowchart of a fourth embodiment of the invention.

### Detailed Description

Embodiments of the present invention base the handover decision at least in part upon EMF exposure. This enables a handover to a new cell even if higher power levels on the UL are required, provided no increase, or no significant increase, in EMF exposure is incurred based on terminal position with respect to the user.

There are two important issues here:
- How to estimate the EMF exposure of the user; and
- How to compensate for the deterioration in the DL link quality if the EMF exposure (which is related to the UL power) is used as handover trigger.

Handover based simply on UL transmit power and distance from the serving base station does not address these issues. A simple example will be given to demonstrate the difference between basing the handover decision on UL transmit power (prior art) and UL transmit power combined with terminal-to-body proximity information (or some other sort of EMF exposure estimate).

Let us assume that the first approach (UL transmit power only) compares estimated UL transmit power for transmission to two base stations and performs handover when their difference exceeds a certain threshold in dBs. The impact of this number in dBs on the difference in the EMF exposure will depend on the terminal location. In other words, even though this proximity of terminal to the body of user is constant for all the base stations (if we ignore the occlusions by the body, antenna radiation patterns, etc.) we still need the information on that proximity to estimate the EMF exposure. Also, this proximity will change over time. Put another way, even if the transmit power difference does not change (or changes so that the handover is actually discouraged based on the first approach), the EMF exposure may change.

Another way of looking at this is the following: suppose that the UL power doubles (i.e. changes by 3dB). This will have very different impact on the EMF exposure depending on the terminal location with respect to the user's body. The exposure may have a linear, or a square dependence on the power, or may not change very much at all. Embodiments of the present invention are based on the recognition that additional information is needed in order to estimate the impact on the EMF exposure other than UL transmit power.

In a first embodiment of the invention, the handover trigger point is based on the EMF exposure of the user. This can ameliorate the DL deterioration problem in the following way: depending on the actual location of the terminal with respect to the user, a higher UL transmit power may cause no increase in the EMF exposure. In this case a compromise between EMF exposure and DL quality is possible.

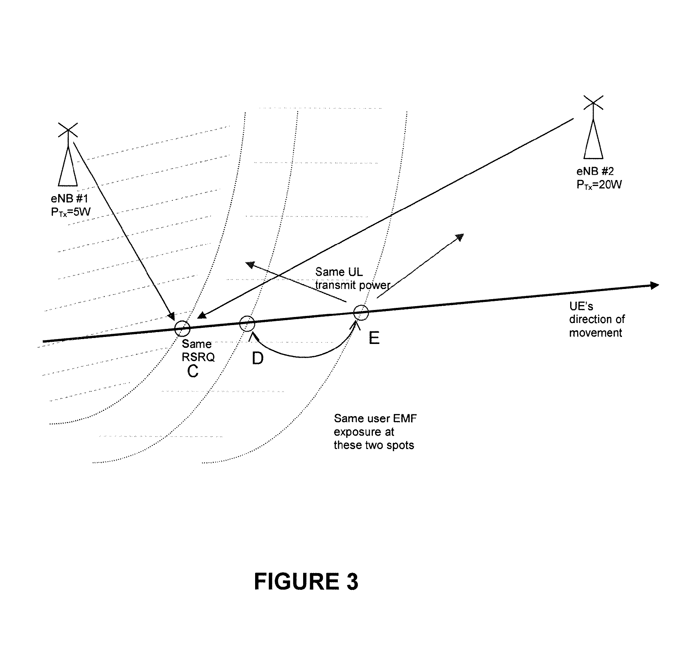

Figure 3 illustrates the principle of this embodiment. Suppose that a UE moves in the direction shown, passing first through a point "C" of same RSRQ with respect to eNB #1 and eNB #2. In this embodiment, the terminal is handed over to eNB #2 at a point (marked "D" in Figure 3) which is between same-RSRQ point "C" and same-UL-transmit-power point "E". Although a higher UL power is needed than in the case when the handover is performed at the same-UL-transmit power point "E", the EMF exposure is not necessarily any higher (because of e.g. greater distance between the terminal and the body of the user), while the DL signal quality up to the handover point is better than if the handover was delayed all the way until point E.

Thus, performing handover at point "C" would require a very high UL transmit power and possibly unacceptable EMF exposure. Handover at point E, on the other hand, would cause degradation in DL quality for the time the UE spends before reaching point E. However, at a point "D" in between "C" and "E" and in the area marked by the broader-spaced dashed lines, where the required UL transmit power is only moderately high, if it can be established that this higher UL power will not cause any, or any significant, increase in EMF exposure of the user, then handover is performed according to this embodiment.

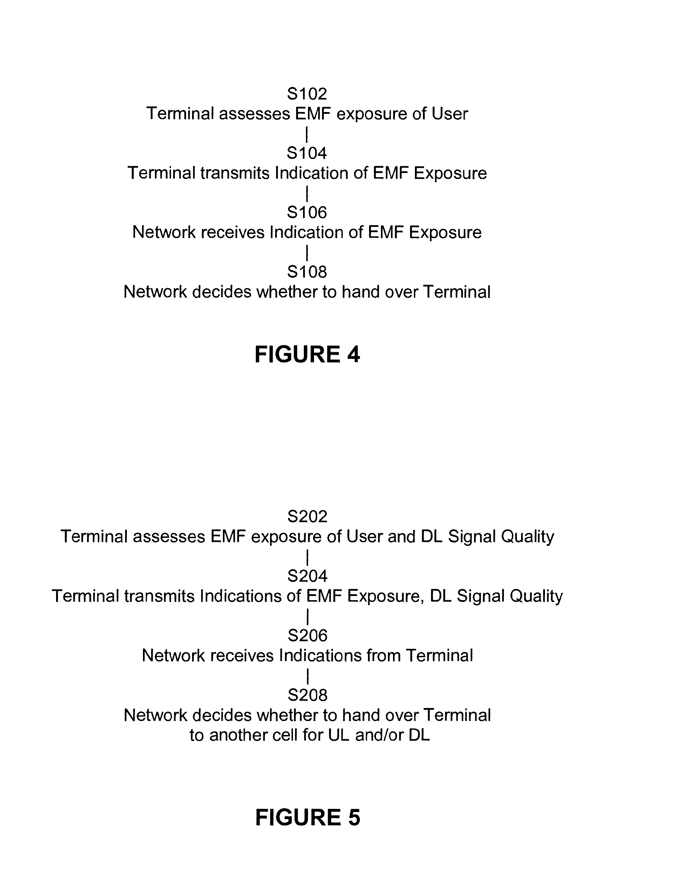

Figure 4 is a flowchart outlining the procedure in this embodiment. First (step S102), in this example, the terminal makes an assessment of the EMF exposure of the user. This can be done in various ways.

One approach is to employ a sensor for the express purpose of detecting EMF at the user, such as a dosimeter. Such a dosimeter could be integrated into the terminal or might be a separate device capable of communicating with the terminal.

Another approach, more applicable to existing mobile terminals, is to combine the known UL transmit power with any available information about the position/orientation of the user's body with respect to the terminal (more particularly, the antenna of the terminal). This information may be obtained directly (via a sensor, accelerometer etc.) or inferred (e.g. by the kinds of services or applications in use).

Obtaining the information directly would include detecting whether or not the terminal is in a horizontal orientation; if so then it is unlikely to be against the user's body.

As an example of inferring position/orientation, if the user is running a streaming video service then it is very likely that the mobile terminal is positioned at a distance from the user's body, or at least is being held at a distance away from the user's head. It should be noted that one situation of concern for EMF exposure is when the terminal is pressed against the user's head, as when making a normal voice call.

Other relevant information capable of being used in the EMF assessment includes a jack detection signal in an earphone socket of a mobile terminal. If earphones are plugged in, this implies that the terminal is being used in hands-free mode. Conversely, if a high audio level is present at an integrated microphone of the terminal, this may be taken as an indication that the terminal is close to the user's mouth.

Another example of relevant information is use of a camera function on a suitably-equipped mobile terminal. If the camera is in use then it is again unlikely that the terminal is being held against the user's body. It may be possible to use a camera's autofocus function to estimate the distance to a body facing the camera. Moreover, images captured by the camera may be analysed by suitable software to detect faces and thereby, infer the proximity of the user's head.

Whilst some of the above considerations may be regarded as uncertain or imprecise, taking multiple such factors into account should allow a rough estimate of EMF exposure to be determined sufficient for the purposes of the present invention (bearing in mind that the method can be repeated as often as desired).

The assessment of EMF level may be continuous, or more preferably (to avoid unnecessary processing), made periodically, such as once per frame (frames being time units of operation in LTE), or on an ad-hoc basis for example in response to the a request from the network.

In a medical/health context, EMF exposure is usually measured in units of V/m or W/m² or as a percentage of a defined maximum recommended exposure level. However, this is not necessary for the purposes of the present invention, for which arbitrary levels such as "high/moderate/low" will suffice. Precisely what actual or inferred EMF levels correspond to such classifications may be set by user preference. For some users, EMF exposure may not be considered an issue whilst for others it may be considered very important.

Next (S104) the terminal transmits some form of indication of, or related to, EMF exposure to the network. This may take various forms, such as a measurement of current electric field strength at a certain point on the user, an estimate of currently-experienced EMF based on power and positional factors, or a measurement/estimate of EMF exposure over a certain time period, such as an accumulative average over several seconds or several minutes. That is, not only the instantaneous EMF but also the exposure over a period of usage of the terminal, may be significant for the handover decision. An absolute EMF level is not essential; the terminal may for example classify the exposure into one of a number of levels and report some indication of the level. This indication may be transmitted periodically or in response to polling or a specific request from the serving station.

Incidentally, it is not essential for the assessment of EMF exposure to be performed at the terminal; instead, related information (such as any of the factors mentioned above) may be reported to the network, with the assessment of EMF made on the network side.

Then (S106) the network receives the indication from the terminal. Normally, this will result from the eNB of the serving cell receiving the transmission, but this is not essential. For example the eNB of a neighbour cell (eNB #2 in Figure 3) may detect the transmission from the terminal and, if necessary communicate the indication to the serving eNB (eNB #1 in Figure 3).

After that (S108) the handover decision is made somewhere in the network taking into account the required handover criteria including at least EMF exposure but preferably also downlink signal quality (including changes therein), battery status of the terminal, and loads in the network. Uplink power may be added as a further criterion, if not already accounted for indirectly in the EMF-related indication and/or downlink signal quality. The criteria may be compared with threshold values chosen to optimise a predefined cost function.

Typically, the serving base station eNB#1 will make the decision, informing eNB #2 to prepare for the handover; however, this is not essential. The handover decision could alternatively be taken at the destination cell (eNB #2) or by a higher-level entity in the network (such as MME 21 in Figure 1).

The UE then carries on wireless communication with the new serving cell (eNB #2) until the process repeats, for example after elapse of a predetermined time period, or in response to the detection of a problematic EMF level by the terminal, or in response to the a request from the network.

Normally, in a handover, both the UL and DL links are transferred to the new serving cell. However, it is possible, while the UE is in the area between points A and B in Figure 2, or between points C and E in Figure 3, to have DL transmissions from eNB #2 and UL transmission to eNB #1, or vice-versa, by separating the UL anchor eNB from the DL anchor eNB. One motivation for separating UL and DL in this way is to avoid deterioration of DL signal quality when performing handover in accordance with the present invention.

Thus, in a second embodiment, a split between UL and DL anchor cells is allowed. Figure 5 illustrates the method in this embodiment. The procedure is basically the same as outlined with respect to Figure 4 except that firstly (S202 and S204), the terminal assesses, and indicates to the network, downlink signal quality in addition to EMF exposure of the user. It should be noted that an indication of downlink signal quality is also possible in the first embodiment. The indication of downlink signal quality may be combined with the indication of EMF level, or may be transmitted as a separate report. Although an explicit measurement of downlink signal quality may be reported, it will normally be sufficient to indicate the downlink signal quality indirectly, for example via a suggested data rate for the measured channel (called CQI in LTE).

As before (S206), the network receives the indication(s) from the terminal. Then (step S208) the handover decision is made based not only on EMF exposure of the user but also on the indication of downlink signal quality. Using downlink signal quality as a criterion (more particularly a difference between the reported downlink signal quality and the expected effect of handover upon the downlink signal quality) will assist the network to decide whether to handover one of UL and DL separately from the other.

Handing over the DL communication link to eNB #2, whilst keeping the UL of the terminal with eNB #1, effectively extends the reach of eNB #1's uplink into the coverage area of eNB #2. The stretching of the UL well into another cell will have two consequences: (1) to cause interference -- in this case to eNB #2; and (2) potentially to cause traffic overloading at the serving cell, in this example at eNB #1. Consequently, the network employs a policy for balancing the exposure limit against the cell interference to neighbour cells and the potential for traffic overloading at the serving cell (bearing in mind that the serving cell also has to accommodate other users).

One kind of policy is to always guarantee low EMF, regardless of the consequences for interference and so forth.

Another policy is to provide a "best effort" service for EMF mitigation, in other words to provide minimum EMF where this is reasonably possible in view of the effects on other users, interference and cell load. Of course, a best effort approach would not necessarily limit EMF exposure to an acceptable level. It may therefore be combined with a guaranteed time limit, beyond which the communications would be discontinued to prevent further EMF exposure, or with measures (see the third embodiment below) to accommodate such users to reduce their exposure levels.

This may result in the following situation: users who take priority (for example by paying for a low EMF service, or owing to their status, such as children and pregnant mothers) would enjoy low EMF exposures, but those who cannot simply have to either suffer service disruptions or simply put up with the prevailing level of EMF exposures.

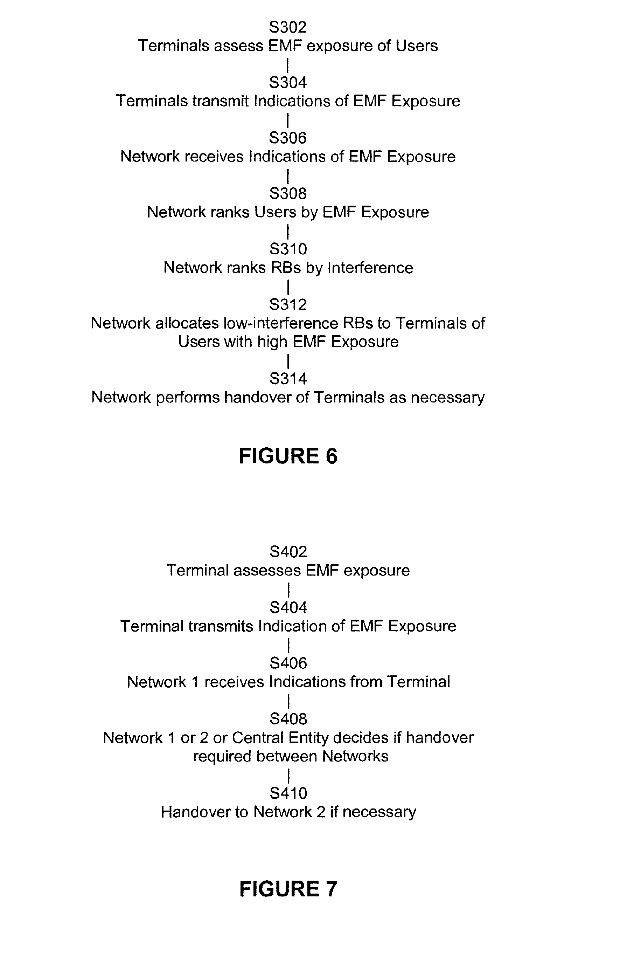

Figure 6 illustrates the third embodiment of the invention, in which measures are taken to allocate resources to multiple users taking into account their EMF exposure, with or without handover. This embodiment may be combined with either of the previous embodiments, but it may be used to avoid the need for separating out UL and DL handover as per the second embodiment. It is based on the fact that each eNB schedules resource blocks (RBs) on the uplink and downlink for communication from and to its respective users. The RBs are subdivisions of the available time and frequency resources in each frame. Some RBs are less prone to interference than others, permitting UL transmission with lower transmit power for example.

In a first step S302, the terminals assess (measure or estimate) the EMF exposure to their respective users as before. Then (S304) the terminals transmit their indications of EMF exposure to the network as explained previously. The network (typically, the serving eNB #1) receives these various indications (S306) and then performs a ranking process (S308) of classifying the users according to their EMF exposure. Meanwhile the eNB knows which RBs are likely to experience less interference and thus likely to allow transmission with lower power (and/or with a higher data rate to reduce the duration of transmission). In step S310 the available RBs are classified by interference level. The purpose of this is in step S314 to partition off "vulnerable users" (those that experience increased levels of EMF) into resource blocks with low interference-or, more specifically to schedule the highest EMF exposure level user to resource blocks with lowest interference.

This allocation of RBs may be made on a network level, that is spanning multiple cells. Thus, it may be that a terminal currently being served by one cell is allocated resources (for UL or DL, or both) on another cell. In Step 314 the network hands over terminals to other cells (for UL or DL, or both) as necessary.

Figure 7 illustrates a further embodiment applied in the context of multiple networks within the same geographical area. As already mentioned distinct wireless communication networks (or radio access networks - RANs) may co-exist using the same, or different, radio access technology (RAT), possibly under control of the same operator. In such a scenario there is the possibility of handing over a terminal from a serving cell in one network to an overlapping or neighbour cell in another network, especially if this would enable the terminal to reduce its UL transmit power. An example is the case in which, in addition to basic wireless coverage provided by an LTE network, a user has Wi-Fi available in his or her home or office. The terminal may be able to reduce its transmit power by switching to the Wi-Fi network.

Thus, assuming that two networks, Network 1 and Network 2, co-exist in the vicinity of a terminal, the terminal assesses its EMF exposure as before (S402). It transmits an indication of its EMF exposure (S404) which is picked up in some way (S406), for example by being received at a serving station in Network 1. A handover decision is then made somewhere In the networks: most typically by the serving base station in Network 1, but possibly also by a base station in Network 2 or by some control entity which co-ordinates both networks. The handover is then performed (S410) by the serving base station in Network 1, if necessary upon request from Network 2 or by instruction from the control entity if any.

In any of the above embodiments, if DL signal deterioration is experienced after a handover, this could be remedied by using carrier aggregation for the DL (increasing the frequency resources available for DL transmission), or by increasing the number of resource blocks allocated to the UE on the DL.

A further possibility is to perform handover in accordance with the above embodiments only (or mainly) in cases where the traffic is UL-dominant. Where the traffic is DL dominant (i.e. when there is only light traffic on UL) the EMF exposure levels will permit UL transmissions at higher power levels. It is assumed that in this instance the EMF exposure level to the user is measured by means of accumulative average over several seconds/ several minutes. Thus depending on the service, the traffic patterns are expected to be different and hence the handover boundary for different services can be different, leading to a better overall efficiency whilst constraining the EMF exposure levels to the user.

To summarise, handover of a terminal between cells of at least one wireless communication network is decided based at least in part on EMF exposure of the user of the terminal. Conventional handover based on downlink signal quality (point C in Figure 3) is likely to incur a significant increase in UL transmit power from the terminal. On the other hand, deciding the handover based on UL transmit power (point E) is likely to involve a deterioration in downlink signal quality. Depending upon the location of the terminal relative to the user, performing handover at an intermediate location (point D) may permit downlink signal quality to be maintained without any, or any significant, increase in EMF exposure.

Thus, the invention proposes handover triggers based on the requirements for low uplink transmit power and low EMF user exposure, rather than solely on downlink channel quality as is normally done in cellular systems. As has been explained above, when the handover is triggered based on a drop in downlink channel quality, the resulting change of the serving base station may result in a steep increase in the uplink power required to maintain the same quality of service. Embodiments of the present invention remedy this by basing the handover triggers on indications of EMF exposure of the user (determined in part based on uplink transmit power) while proposing ways to mitigate a potential degradation in downlink signal quality such a handover may cause. Additional inputs to the handover process are proposed in this invention, including service-related triggers (e.g. whether the user traffic is uplink or downlink dominated), and utilization-related triggers (e.g. what the usage of uplink resources is). These help mitigate interference and loading issues our proposed type of handover may incur in some instances. The invention can be applied to 3GPP LTE-A and other wireless/cellular mobile communications networks.

Various modifications are possible within the scope of the present invention.

Although the above embodiments have focussed on EMF exposure due to UL transmit power of the terminal, this need not be the only source of EMF exposure which the present invention can take into account, particularly if EMF is detected directly such as via a dosimeter. For example, if the terminal has Bluetooth switched on then this will tend to add to the user's EMF exposure.

As already mentioned, for some users, EMF exposure may not be considered an issue whilst for others it may be considered very important. Therefore, embodiments of the present invention may be applied only to terminals for which a corresponding EMF exposure limiting function has been switched on by the user.

In describing the above embodiments, reference has been made to an indication of EMF exposure. However, it is not essential for the terminal to indicate EMF directly. Rather, it is sufficient for the terminal to report any one or more of the factors mentioned above related to the user's EMF exposure, such as:
- a location of the terminal with respect to the user;
- an orientation of the terminal with respect to the user;
- a measurement of EMF dosage of the user;
- an uplink transmit power of the terminal; and
- a user requirement on EMF exposure.

Whilst the present invention concerns triggers for handover, the actual handover itself is outside the scope of the invention and may be performed in any manner specified in the network(s) concerned. Moreover, although handover is typically triggered in response to the movement of a terminal as illustrated in Figures 2 and 3, movement of the terminal is not a prerequisite. Criteria for a handover decision such as EMF level and downlink signal quality may vary irrespective of any change in location of the user. References to handover decisions taken at a base station or by the network include approving or not approving handover requests made by terminals on the basis of any known criteria.

Whilst the above embodiments have been described with respect to LTE, this is only an example. Embodiments of the present invention may be applied to a wide range of wireless communication networks. For example in a UTMS-based network, the downlink signal quality may be indicated via the received signal code power C-PICH RSCP, and in a WiMAX network CINR or RSSI may be used to indicate downlink signal quality.

### Industrial Applicability

Maintaining low UL transmit power has the benefit of reducing the EMF exposure of the user as well as preserving the battery life of the terminal. However, basing a handover decision solely on UL transmit power (as has been proposed in the prior art) could lead to an increase in interference and traffic loading, as well as severe degradation of DL channel quality. Embodiments of the present invention employ EMF exposure as a criterion for handover, enabling a handover to a new cell even if higher power levels on the UL are required, provided no significant increase in EMF exposure is incurred based on terminal position with respect to the user. This has the benefit of reducing the DL signal deterioration a handover based solely on UL transmit power would incur.

## Claims

1. A method of performing handover in at least one wireless communication network of a terminal (12) from a serving cell to another cell, **characterised by** the method comprising:
the terminal (12) making an assessment of EMF exposure of a user of the terminal;
the terminal (12) transmitting an indication related to the EMF exposure of the user;
a said network receiving said indication; and
a said network deciding to perform handover of the terminal (12) by basing the handover decision on one or more criteria including said indication.

2. The method of claim 1, further comprising the terminal (12) transmitting information derived from a measurement of downlink signal quality, and wherein the criteria used in the deciding step take into account said information.

3. The method of claim 2 wherein the network or the terminal (12) derives, from two or more measurements of downlink signal quality, a change in the downlink signal quality as a criterion used in said deciding step.

4. The method of any preceding claim, wherein the criteria used in said deciding step further include at least one of:
prior indications received from the terminal (12) related to EMF exposure;
a battery status of the terminal; and
a ratio of uplink traffic to downlink traffic between the terminal and its serving cell.

5. The method of any preceding claim, wherein each of the criteria are compared to threshold values.

6. The method of claim 5, where the threshold values optimise a pre-defined cost function.

7. The method of claim 6, where the cost function includes an expected effect of a handover on terminal battery life.

8. The method of any preceding claim, wherein said indication related to EMF exposure is based on, or indicates, one or more of:
a location of the terminal (12) with respect to the user;
an orientation of the terminal with respect to the user;
a measurement of EMF dosage of the user;
an uplink transmit power of the terminal; and
a user requirement on EMF exposure.

9. The method of any preceding claim wherein the handover is restricted to one of uplink and downlink communication whereby the terminal (12) may have a different serving cell for uplink and downlink respectively.

10. The method according to claim 9 wherein the terminal (12) transmits information derived from a measurement of downlink signal quality, and wherein the step of deciding to perform handover of the terminal comprises deciding to handover uplink communication to said another cell whilst keeping downlink communication with said serving cell in view of the downlink signal quality.

11. The method of any preceding claim wherein there are a plurality of terminals (12) for which it is decided whether or not to perform handover, the method further comprising:
ranking terminals in order of greatest constraint on uplink transmit power in view of their indications related to EMF exposure;
determining, in the at least one network, uplink resources subject to least interference;
allocating the uplink resources of least interference to the terminals based on the rank; and
performing handover of the terminal, at least on the uplink, if necessary to use the resources allocated.

12. The method of any preceding claim wherein there are a plurality of terminals (12) for which it is decided whether or not to perform handover, the method further comprising:
ranking terminals in order of least downlink channel quality;
determining, in the at least one network, downlink resources subject to least interference;
allocating the downlink resources of least interference to the terminals based on the rank; and
performing handover of the terminal, at least on the downlink, if necessary to use the resources allocated.

13. A wireless communication system comprising a terminal (12, UE) and one or more base stations (11, eNB#1, eNB#2) providing a serving cell and another cell, **characterised in that**:
the terminal is arranged to assess EMF exposure of a user of the terminal and to transmit an indication related to the EMF exposure of the user;
a said base station is arranged to receive said indication; and
a said base station is arranged to make a handover decision of the terminal using one or more criteria including said indication.

14. A terminal (12) for use in a wireless communication network **characterised by** comprising:
means for assessing EMF exposure of a user of the terminal and determining an indication related to the EMF exposure of the user;
means for measuring signal quality on a downlink from a serving cell;
means for deriving a change in downlink signal quality from two or more such measurements; and
means for transmitting the indication related to the EMF exposure of the user and an indication of the change in downlink signal quality.

## Patentansprüche

1. Ein Verfahren zum Ausführen einer Übergabe in zumindest einem Drahtloskommunikationsnetzwerk eines Endgeräts (12) von einer dienenden Zelle zu einer anderen Zelle, **dadurch gekennzeichnet, dass** das Verfahren umfasst:
dass das Endgerät (12) eine Bewertung einer EMF-Aussetzung eines Anwenders des Endgerätes ausführt;
dass das Endgerät (12) einen die EMF-Aussetzung des Anwenders betreffenden Hinweis überträgt;
dass das Netzwerk den Hinweis empfängt; und
dass das Netzwerk bestimmt, eine Übergabe des Endgeräts (12) auszuführen, durch Basieren der Übergabeentscheidung auf einem oder mehreren den Hinweis umfassenden Kriterien.

2. Verfahren gemäß Anspruch 1, weiter umfassend, dass das Endgerät (12) eine von einer Messung einer Downlink-Signalqualität abgeleiteten Information überträgt, und wobei die in dem Entscheidungsschritt verwendeten Kriterien diese Informationen berücksichtigen.

3. Verfahren gemäß Anspruch 2, wobei das Netzwerk oder das Endgerät (12) aus zwei oder mehr Messungen einer Downlink-Signalqualität eine Änderung in der Downlink-Signalqualität als ein in dem Entscheidungsschritt verwendetes Kriterium ableiten.

4. Verfahren gemäß einem der vorstehenden Ansprüche, wobei die in dem Entscheidungsschritt verwendeten Kriterien weiter zumindest eine der folgenden umfassen:
vorherige eine EMF-Aussetzung betreffende Hinweise, welche von dem Endgerät (12) empfangen sind;
einen Batteriestatus des Endgeräts; und
ein Verhältnis von Uplink-Verkehr zu Downlink-Verkehr zwischen dem Endgerät und dessen dienender Zelle.

5. Verfahren gemäß einem der vorstehenden Ansprüche, wobei jedes der Kriterien zu Schwellenwerten verglichen wird.

6. Verfahren gemäß Anspruch 5, wobei die Schwellenwerte eine vordefinierte Kostenfunktion optimieren.

7. Verfahren gemäß Anspruch 6, wobei die Kostenfunktion einen erwarteten Effekt einer Übergabe auf eine Endgerätebatterie-Lebensdauer umfasst.

8. Verfahren gemäß einem der vorstehenden Ansprüche, wobei der eine EMF-Aussetzung betreffende Hinweis auf einem oder mehreren der Folgenden basiert oder diesen angibt,:
eine Position des Endgeräts (12) mit Bezug zu dem Anwender;
eine Orientierung des Endgeräts mit Bezug zu dem Anwender;
eine Messung einer EMF-Dosis des Anwenders;
eine Uplink-Übertragungsleistung des Endgeräts; und
eine Anwender Anforderung bezüglich einer EMF-Aussetzung.

9. Verfahren gemäß einem der vorstehenden Ansprüche, wobei die Übergabe auf eine Uplink- und eine Downlink-Kommunikation beschränkt ist, wodurch das Endgerät (12) eine unterschiedliche dienende Zelle jeweils für einen Uplink und einen Downlink aufweisen kann.

10. Verfahren gemäß Anspruch 9, wobei das Endgerät (12) eine aus einer Messung einer Downlink-Signalqualität abgeleiteten Information überträgt und wobei der Entscheidungsschritt zum Ausführen einer Übergabe des Endgeräts ein Entscheiden zum Übergeben einer Uplink-Kommunikation zu der anderen Zelle, während eine Downlink-Kommunikation mit der dienenden Zelle beibehalten wird, in Anbetracht der Downlink-Signalqualität umfasst.

11. Verfahren gemäß einem der vorstehenden Ansprüche, wobei es eine Vielzahl von Endgeräten (12) gibt, für welche bestimmt wird, ob eine Übergabe auszuführen ist oder nicht, wobei das Verfahren weiter umfasst:
Erstellen einer Rangfolge von Endgeräten in einer Reihenfolge einer größten Beschränkung bezüglich einer Uplink-Übertragungsleistung in Anbetracht der eine EMF-Aussetzung betreffenden Hinweise;
Bestimmen, in dem zumindest einen Netzwerk, von Uplink-Ressourcen, welche einer geringsten Interferenz ausgesetzt sind;
Zuordnen der Uplink-Ressourcen einer geringsten Interferenz zu den Endgeräten basierend auf der Rangfolge; und
Ausführen einer Übergabe des Endgeräts zumindest im Uplink, falls es notwendig ist, die zugeordneten Ressourcen zu verwenden.

12. Verfahren gemäß einem der vorstehenden Ansprüche, wobei es eine Vielzahl von Endgeräten (12) gibt, für welche bestimmt wird, ob eine Übergabe auszuführen ist oder nicht, wobei das Verfahren weiter umfasst:
Erstellen einer Rangfolge von Endgeräten in einer Reihenfolge einer geringsten Downlink-Kanalqualität;
Bestimmen, in dem zumindest einen Netzwerk, von Downlink-Ressourcen, welche einer geringsten Interferenz ausgesetzt sind;
Zuordnen der Downlink-Ressourcen einer geringsten Interferenz zu den Endgeräten basierend auf der Rangfolge; und
Ausführen einer Übergabe des Endgeräts, zumindest im Downlink, falls es notwendig ist, die zugeordneten Ressourcen zu verwenden.

13. Ein Drahtloskommunikationssystem, umfassend ein Endgerät (12, UE) und eine oder mehrere Basisstationen (11, eNB#1, eNB#2), welche eine dienende Zelle und eine andere Zelle bereitstellen, **dadurch gekennzeichnet, dass**:
das Endgerät angeordnet ist, eine EMF-Aussetzung eines Anwenders des Endgeräts zu bewerten und einen die EMF-Aussetzung des Anwenders betreffenden Hinweis zu übertragen;
dass die Basisstation angeordnet ist, den Hinweis zu empfangen; und
dass die Basisstation angeordnet ist, eine Übergabeentscheidung des Endgeräts unter Verwendung von einem oder mehreren den Hinweis umfassenden Kriterien auszuführen.

14. Ein Endgerät (12) zur Verwendung in einem Drahtloskommunikationsnetzwerk, **dadurch gekennzeichnet, dass** dieses umfasst:
ein Mittel zum Bewerten einer EMF-Aussetzung eines Anwenders des Endgeräts und Bestimmen eines zu der EMF-Aussetzung des Anwenders betreffenden Hinweises;
ein Mittel zum Messen einer Signalqualität in einem Downlink von einer dienenden Zelle;
ein Mittel zum Ableiten einer Änderung in einer Downlink-Signalqualität von zwei oder mehr solchen Messungen; und
ein Mittel zum Übertragen des die EMF-Aussetzung des Anwenders betreffenden Hinweises und eines Hinweises der Änderung in einer Downlink-Signalqualität.

## Revendications

1. Procédé d'exécution d'un transfert dans au moins un réseau de communication sans fil d'un terminal (12) d'une cellule de desserte à une autre cellule, **caractérisé par** le procédé comprenant :
le terminal (12) effectuant une évaluation d'exposition EMF d'un utilisateur du terminal ;
le terminal (12) transmettant une indication liée à l'exposition EMF de l'utilisateur ;
un dit réseau recevant ladite indication ; et
un dit réseau décidant d'exécuter un transfert du terminal (12) en basant la décision de transfert sur un ou plusieurs critères incluant ladite indication.

2. Procédé selon la revendication 1, comprenant en outre le terminal (12) transmettant des informations dérivées d'une mesure de qualité de signal de liaison descendante, et dans lequel les critères utilisés à l'étape de décision prennent en compte lesdites informations.

3. Procédé selon la revendication 2, dans lequel le réseau ou le terminal (12) dérive, de deux mesures ou plus de qualité de signal de liaison descendante, un changement de la qualité de signal de liaison descendante comme un critère utilisé à ladite étape de décision.

4. Procédé selon l'une quelconque des revendications précédentes, dans lequel les critères utilisés à ladite étape de décision incluent en outre au moins un parmi :
des indications antérieures reçues en provenance du terminal (12) liées à une exposition EMF ;
un état de batterie du terminal ; et
un rapport de trafic de liaison montante sur un trafic de liaison descendante entre le terminal et sa cellule de desserte.

5. Procédé selon l'une quelconque des revendications précédentes, dans lequel chacun des critères est comparé à des valeurs de seuil.

6. Procédé selon la revendication 5, dans lequel les valeurs de seuil optimisent une fonction de coût prédéfinie.

7. Procédé selon la revendication 6, dans lequel la fonction de coût inclut un effet attendu d'un transfert sur une durée d'utilisation de batterie de terminal.

8. Procédé selon l'une quelconque des revendications précédentes, dans lequel ladite indication liée à une exposition EMF est basée sur, ou indique, un ou plusieurs parmi :
une localisation du terminal (12) par rapport à l'utilisateur ;
une orientation du terminal par rapport à l'utilisateur ;
une mesure de dosage EMF de l'utilisateur ;
une puissance de transmission de liaison montante du terminal ; et
une exigence d'utilisateur sur une exposition EMF.

9. Procédé selon l'une quelconque des revendications précédentes, dans lequel le transfert est restreint à une d'une communication de liaison montante et de liaison descendante moyennant quoi le terminal (12) peut avoir une cellule de desserte différente pour la liaison montante et la liaison descendante respectivement.

10. Procédé selon la revendication 9, dans lequel le terminal (12) transmet des informations dérivées d'une mesure de qualité de signal de liaison descendante, et dans lequel l'étape consistant à décider d'exécuter un transfert du terminal comprend la décision de transférer la communication de liaison montante vers ladite une autre cellule tout en conservant la communication de liaison descendante avec ladite cellule de desserte au vu de la qualité de signal de liaison descendante.

11. Procédé selon l'une quelconque des revendications précédentes, dans lequel il y a une pluralité de terminaux (12) pour lesquels il est décidé si oui ou non exécuter un transfert, le procédé comprenant en outre :
le classement par rang de terminaux par ordre de contrainte la plus grande sur la puissance de transmission de liaison montante au vu de leurs indications liées à une exposition EMF ;
la détermination, dans le au moins un réseau, de ressources de liaison montante soumises à une moindre interférence ;
l'allocation des ressources de liaison montante de moindre interférence aux terminaux sur la base du rang ; et
l'exécution d'un transfert du terminal, au moins sur la liaison montante, si nécessaire utiliser les ressources allouées.

12. Procédé selon l'une quelconque des revendications précédentes, dans lequel il y a une pluralité de terminaux (12) pour lesquels il est décidé si oui ou non exécuter un transfert, le procédé comprenant en outre :
le classement par rang de terminaux par ordre de moindre qualité de canal de liaison descendante ;
la détermination, dans le au moins un réseau, de ressources de liaison descendante soumises à une moindre interférence ;
l'allocation des ressources de liaison descendante de moindre interférence aux terminaux sur la base du rang ; et
l'exécution d'un transfert du terminal, au moins sur la liaison descendante, si nécessaire utiliser les ressources allouées.

13. Système de communication sans fil comprenant un terminal (12, UE) et une ou plusieurs stations de base (11, eNB#1, eNB#2) fournissant une cellule de desserte et une autre cellule, **caractérisé en ce que** :
le terminal est agencé pour évaluer une exposition EMF d'un utilisateur du terminal et pour transmettre une indication liée à l'exposition EMF de l'utilisateur ;
une dite station de base est agencée pour recevoir ladite indication ; et
une dite station de base est agencée pour prendre une décision de transfert du terminal en utilisant un ou plusieurs critères incluant ladite indication.

14. Terminal (12) destiné à être utilisé dans un réseau de communication sans fil, **caractérisé en ce qu'**il comprend :
des moyens pour évaluer une exposition EMF d'un utilisateur du terminal et déterminer une indication liée à l'exposition EMF de l'utilisateur ;
des moyens pour mesurer une qualité de signal sur une liaison descendante à partir d'une cellule de desserte ;
des moyens pour dériver un changement de qualité de signal de liaison descendante de deux telles mesures ou plus ; et
des moyens pour transmettre l'indication liée à l'exposition EMF de l'utilisateur et une indication du changement de qualité de signal de liaison descendante.
